# EUROPÄISCHE PATENTANMELDUNG

(11) **EP 3 335 555 A1**
(43) Veröffentlichungstag der Anmeldung: **20.06.2018**
(21) Anmeldenummer: 16205018.1
(22) Anmeldetag: 19.12.2016
(51) Int. Cl.: A01N 25/12, A01N 59/06, A01N 37/02, A01P 3/00

(54) **SCHWERMETALLFREIER, KALZIUMHYDROXID-BASIERTER WIRKSTOFF**

(71) Anmelder: Kalkfabrik Netstal AG, 8754 Netstal (CH)
(72) Erfinder: Stark, Wendelin, 4900 Langenthal (CH)
(74) Vertreter: Grimm, Siegfried

(57) **Zusammenfassung**

Die vorliegende Erfindung betrifft partikuläre Zusammensetzungen, enthaltend ein spezifisches Gemisch aus Kalziumhydroxid, Fettsäuren und ggf. Additiven; deren Anwendung im Bereich Pflanzenschutz, sowie deren Herstellung.

## Beschreibung

Die vorliegende Erfindung betrifft partikuläre Zusammensetzungen, geeignet als Pflanzenschutzmittel zur Ausbringung als feste oder flüssige Formulierung, sowie deren Herstellung.

Die moderne Landwirtschaft setzt zahlreiche Produkte zur Ertragssteigerung, Sicherung und Qualitätsverbesserung der Ernte ein, und hat sich zu einem komplexen und anspruchsvollem Wissenschaftszweig entwickelt. Die Verwendung grosser Mengen künstlicher, meist synthetisch chemischer Produkte hat zu Folgeproblemen in Umwelt, insbesondere in der Artenvielfalt, sowie Ökosystemleistung und bei der menschlichen Gesundheit geführt. Diese oft gravierenden Folgen des Einsatzes von meist synthetischen Pflanzenschutzprodukten hat zu einem stärkeren Problembewusstsein bei allen Beteiligten geführt, so dass heute viele Konsumenten und Produzenten zu nachhaltigeren Methoden wechseln, oder wechseln wollen.

Die Entwicklung von Wirkstoffen mit einem nachweislich geringeren Schaden für die Umwelt und den Menschen ist daher grundsätzlich relevant. Nebst Umweltpersistenz bei schlecht abbaubaren Verbindungen und damit verbundener Möglichkeit zur Anreicherung in Ökosystemen und der Nahrungskette ist die Verwendung von Schwermetallen speziell problematisch. Ein spezifisches Beispiel für ein problematisches Schwermetall ist Kupfer, welches einerseits mit grossem Erfolg gegen zahlreiche Schadorganismen wirksam ist, andererseits aber durch jahrelange Exposition zu erheblichen Belastungen in Böden und Wasser führt. Zudem gelangen Reste des Schwermetalls in die Ernte, wo sie ihrerseits dann zu einer Exposition beim Menschen führen.

Es besteht daher, insbesondere im biologischen Landbau, die Tendenz zu einfacheren Produkten, mit einem bioabbaubaren Wirkstoff, und begrenzter Wirkdauer. In diesem Zusammenhang sind eine Reihe von Wirkstoffen bekannt.
A) Kupfersalze und Derivate. Kupferhaltige Produkte werden seit Jahrhunderten im Weinanbau eingesetzt und sind selbst im biologischen Landbau mit Auflagen erlaubt. Bekannt ist die klassische Bordeaux-Brühe, eine Dispersion aus einem gefällten Kupferhydroxid-Derivat. Unter dem Handelsnamen Atempo Kupfer Pilzfrei werden Pflanzenschutzmittel vertrieben, enthaltend 100 g / L Kupferoktanoat. In allen Fällen ist aber die Verwendung von Kupfer unerwünscht, da es zu o.g. Nachteilen führt.
B) Metallsalze. Sedun (US5395851 und US5246716) beschreibt pastöse Formulierungen zur Behandlung von Baumwunden. Die Formulierungen enthalten Metallsalze von Fettsäuren, als Metalle werden Ca, Cu, Fe, Mg und Zn genannt. Während diese Formulierungen als vorbeugende Massnahme im Gehölzbau geeignet sind, ist das Wirkungsspektrum in anderen Bereichen unzureichend.
C) beschichtetes Kalziumoxid. Stark (WO 2014/075197 und EP2944610) beschreibt ein modifiziertes Kalziumoxid und dessen Anwendung im Pflanzenschutz, insbesondere als Fungizid oder Bakterizid. Die dort beschriebenen Formulierungen zeigen grundsätzlich gute Wirkung. Jedoch sind die beschriebenen Materialien nur für trockene Formulierungen geeignet, nicht jedoch für flüssige Formulierungen. Die Limitierung auf trockene Formulierungen ist nachteilig, da trockene Ausbringungsmethoden in der Landwirtschaft wenig verbreitet sind. Insbesondere der mit solchen Ausbringungsmethoden verbundene Staub, die Verbreitung der Staubwolken, sowie der Aufwand für die Arbeitssicherheit sind nachteilig.

Es besteht daher ein Bedarf das Wirkspektrum der kupferhaltigen Formulierungen auf schwermetallfreie Formulierung zu übertragen, und so einerseits guten Pflanzenschutz und anderseits gute Umweltverträglichkeit zu kombinieren. Solche Formulierungen sollten ferner wirtschaftliche und praktische Anforderungen berücksichtigen, insbesondere eine einfach Anwendbarkeit und eine günstige Herstellbarkeit.

Die vorstehend umrissenen Aufgaben werden gemäss den unabhängigen Ansprüchen gelöst. Die abhängigen Ansprüche stellen vorteilhafte Ausführungsformen dar. Weitere Ausgestaltungen der Erfindung können der Beschreibung und den Figuren entnommen werden.

Die Erfindung wird nachstehend im Detail erläutert. Sofern sich aus dem direkten Zusammenhang keine andere Bedeutung ergibt, haben die folgenden Begriffe die hier angegebene **Bedeutung.**

Die im Zusammenhang mit der vorliegenden Erfindung gegebenen allgemeinen, bevorzugten und besonders bevorzugten Ausführungsformen, Bereiche usw. können beliebig miteinander kombiniert werden. Ebenso können einzelne Definitionen, Ausführungsformen usw. entfallen bzw. nicht relevant sein. Der Begriff "umfassend" soll die Bedeutungen "enthaltend" und "bestehend aus" einschliessen. Prozentangaben sind, soweit nicht anders vermerkt, als Massen-% (Gew.%) angegeben.

Partikel oder Korngrösse. Der Begriff "Partikel- oder Korngrösse" wird synonym verwendet, ist allgemein bekannt und kann nach gängigen Methoden bestimmt werden. Sofern sich in der vorliegenden Erfindung nichts anderes ergibt, wird die Partikelgrösse als "mittlere Partikelgrösse" angegeben. Für Partikel im Mikrometerbereich (Durchmesser über 10 Mikrometer) erfolgt die Messung bevorzugt mittels Lasergranulometrie (z.B. Sympatec HELOS). Für Partikel über 100 Mikrometer Grösse wird bevorzugt eine Siebanalyse angewendet. Eine Angabe 0-200 Mikrometer als Resultat einer Siebanalyse ist dahin zu verstehen, dass der obere Grenzwert für die Partikelgrösse 200 Mikrometer beträgt (bspw. durch Bestimmung des Siebrückstandes durch Luftstrahlsiebung), der untere Grenzwert jedoch in einem sinnvollen technischen Bereich liegt (bspw. wie durch ein Mahlverfahren gegeben).

Stabilität: Die Stabilität einer Zusammensetzung bzw. Formulierung soll im Rahmen der vorliegenden Erfindung dahingehend verstanden werden, dass die Zusammensetzung unter den Bedingungen der Praxis, insbesondere der Anwendung als Wirkstoffformulierung in der Landwirtschaft, nicht wesentlichen Veränderungen unterliegt. Wesentliche Veränderungen können chemische Veränderungen sein, wie das Umwandeln einer chemischen Substanz in eine andere. Wesentliche Veränderungen können auch physikalische Veränderungen sein, wie das Verbacken eines Pulvers, wobei der Stoff dadurch nicht mehr anwendbar wird. Letztere sind insbesondere bei Dispersionen von Interesse, da Dispersionen einerseits gute Dispersionen sein können (aus Sicht des Anwenders also genug lange anwendbar bleiben) oder andererseits schlechte Dispersionen (die aus Sicht des Anwenders schlecht anwendbar sind, und dadurch ungleichmässig werden, oder nicht mehr pump- oder sprühbar, oder sogar ganz zerfallen und einen Feststoff-Bodensatz bilden, und oben in der Dispersion klaren Überstand bilden). Chemische Veränderungen lassen sich mit entsprechenden Analysemethoden nachweisen, und sind dem Fachmann hinreichend bekannt. Physikalische Veränderungen sind ebenfalls mit geeigneten Methoden messbar, und dem Fachmann bekannt.

In einem **ersten Aspekt** bezieht sich die Erfindung daher auf eine partikuläre Zusammensetzung, enthaltend ein Gemisch aus (a) Kalziumhydroxid, (b) Fettsäuren und ggf. (c) Additiven.

Es zeigt sich, dass diese Zusammensetzungen ein erstaunlich breites Wirkungsspektrum im Bereich Pflanzenschutz aufweisen und gleichzeitig so stabil sind, dass eine feste oder flüssige Formulierung erzeugt werden kann. Schliesslich sind diese Zusammensetzungen einfach herstellbar und aufgrund ihrer Ausgangsmaterialien preiswert.

Die Komponenten (a) und (b) sind reaktiv und bilden bei Kontakt Kalziumsalze von Fettsäuren unter Abspaltung von Wasser. Diese Reaktion kann teilweise oder vollständig ablaufen. Werden geringe Mengen an (b) zugesetzt, kann diese Komponente ggf. vollständig abreagieren, so dass die Zusammensetzung neben Kalziumhydroxid noch das Kalziumsalz der Fettsäure enthält, jedoch keine freie Fettsäure. Bei höheren Anteilen an Fettsäure kann die Umsetzung unvollständig sein und somit enthält die Zusammensetzung Kalziumhydroxid, das Kalziumsalz der Fettsäure und freie Fettsäure. Die hier beschriebenen partikulären Zusammensetzungen enthalten daher Komponenten (a) und (b) und / oder deren Reaktionsprodukte (d.h. insbesondere Kalziumsalze der Fettsäuren) sowie ggf. Komponente (c) und ggf. Wasser. Das Gemisch aus den Komponenten (a) und (b) sowie deren Reaktionsprodukten wird aufgrund Ihrer Wirkung im Pflanzenschutz (vgl. 3.Aspekt der Erfindung und Beispiele) auch als "Wirkstoff" bezeichnet.

Dieser 1. Aspekt der Erfindung soll, insbesondere mit Bezug auf die einzelnen Komponenten, nachstehend erläutert werden.

**Komponente (a), Kalziumhydroxid,** auch als gelöschter Kalk, oder Löschkalk bezeichnet. Der Begriff ist bekannt und beschreibt im wesentlichen Kalziumhydroxid Ca(OH)₂ mit wechselndem Gehalt an Feuchte, Rest-Kohlendioxid und allenfalls Rest-Kalziumoxid. Der Gehalt an organischem Material als Verunreinigung ist sehr tief (weniger als 1 g pro kg Kalziumhydroxid), da das Material durch Löschen (Reaktion mit Wasser) von Branntkalk hergestellt wird. Letzterer wird durch Brennen (Erhitzen auf mind. 700, meist über 1000 °C) von Kalk hergestellt; dabei verbrennen organische Verbindungen. Typische Materialien enthalten > 90 Gew.% Ca(OH)2. Das Material liegt typischerweise als feinstes Pulver mit einer Partikelgrösse im Bereich von Mikrometern vor. Kalziumhydroxid ist an Luft gegenüber Feuchtigkeit beständig, nimmt aber langsam aus der Luft Kohlendioxid auf ("Carbonatisierung"). Wegen der geringen CO₂- Konzentration in der Luft, ist die Carbonatisierung sehr langsam und Kalziumhydroxid wird daher für die meisten Anwendungen an Luft, unter Umgebungsbedingungen als stabil angesehen.

Schwermetallgehalt: Die Zusammensetzungen der vorliegenden Erfindung sind schwermetallfrei und somit umweltfreundlich. Als Schwermetall werden Metalle bezeichnet deren Dichte über 5 g pro cm³ liegt. Entsprechend weist Komponente (a) einen Schwermetallgehalt von weniger als 5000 ppm, bevorzug weniger als 1000 ppm, insbesondere weniger als 500 ppm, bspw. weniger als 100 ppm, auf. Für bestimmte Schwermetalle wie Kupfer, Cadmium, Quecksilber oder Blei gelten im Bereich Pflanzenschutz ggf. zusätzliche Grenzwerte; diese können von den hier beschriebenen Zusammensetzungen problemlos eingehalten werden. Der Schwermetallgehalt der einzelnen Komponenten, der Zusammensetzung und der Formulierung lässt sich mit verschiedenen Methoden messen, je nach Element, und ist dem Fachmann hinreichend bekannt. Geeignet sind bspw. ICP-MS (inductively coupled plasma mass spectroscopy) oder AAS (atom absorption spectroscopy) welche diese Werte im Vergleich mit einer Referenz ermitteln.

Geeignete Qualitäten von Komponente (a) sind kommerziell erhältlich, bspw. durch die Firma Kalkfabrik Netstal AG, unter dem Namen nekapur 2 oder nekablanc 0 ("Weisskalkhydrat", "gelöschter Kalk").

**Komponente (b), Fettsäuren:** Der Begriff Fettsäuren ist bekannt, und umfasst Karbonsäuren, die als kürzere, mittlere oder längere Fettsäuren bezeichnet werden. Als kurzkettig werden C₁ bis C₅ Carbonsäuren (Ameisensäure bis Pentansäure) bezeichnet. Als Carbonsäuren mittlerer Kettenlänge werden C₆ bis C₁₄ Carbonsäuren bezeichnet. Langkettige Carbonsäuren enthalten mindestens 15 Kohlenstoffatome pro Säureeinheit. Damit umfasst die Substanzklasse "Fettsäuren mit mittleren Kettenlänge" die Carbonsäuren Hexansäure (C₆), Oktansäure (C₈), Dekansäure (C₁₀), Dodekansäure (C₁₂) und Tetradekansäure (C₁₄). Daneben gehören zu dieser Substanzklasse auch die ungeraden Cₙ Fettsäuren, C₇, C₉ usw., welche aber in Fettsäuren von natürlicher Herkunft selten sind. Bevorzugt sind Hexansäure (C₆), Oktansäure (C₈), Dekansäure (C₁₀), Dodekansäure (C₁₂) und Tetradekansäure (C₁₄).

Fettsäuren umfasst die gesättigten und ungesättigten Fettsäuren, wobei die gesättigten Fettsäuren bevorzugt sind. Die meisten natürlichen Fettsäuren haben nur eine Säurefunktion pro Molekül. Die meisten Fettsäuren sind nicht weiter funktionalisiert und linear. Seltene Fettsäuren enthalten zusätzliche funktionelle Gruppen, insbes. Hydroxylgruppen, oder Verzweigungen.

Fettsäuren können als chemisch reine Verbindung oder als Gemisch verschiedener Fettsäuren vorliegen. Im Rahmen dieser Erfindung sind sowohl reine Fettsäuren als auch Fettsäuregemische vom Begriff "Fettsäure" umfasst.

Abhängig von der Herstellung können Fettsäuren mit geringerer chemischer Reinheit zur Anwendung kommen, Somit sind auch Fettsäuren technischer Reinheit ("technical grade") umfasst.

In einer Ausgestaltung der Erfindung ist Komponente (b) aus natürlichen Quellen gewonnen.

In einer Ausgestaltung der Erfindung ist Komponente (b) zu mindestens 50 Gew.% aus Fettsäuren von mittlerer Kettenlänge sind (C₆ bis C₁₄) gebildet. Bevorzugt ist Komponente (b) zu 50 Gew.% aus Fettsäuren der Gruppe bestehend aus Oktan-, Dekan- und Dodekansäure gebildet; besonders bevorzugt ist Komponente (b) zu mindestens 50 Gew.% aus Oktansäure gebildet.

In einer weiteren Ausgestaltung der Erfindung weisen mindestens 80 Gew.% der Fettsäure-Moleküle (b) eine Kettenlänge von mindestens 6 Kohlenstoffen (Hexansäure) auf.

In einer weiteren Ausgestaltung der Erfindung ist Komponente (b) eine reine C₈₋₁₂ Fettsäure.

In einer weiteren Ausgestaltung der Erfindung ist Komponente (b) ein Gemisch von Fettsäuren, wobei mindestens 80 Gew.% der Fettsäure-Moleküle eine Kettenlänge von mindestens 8 Kohlenstoffen (Oktansäure) beinhalten.

Fettsäuren, Komponente (b) sind kommerziell erhältlich. Komponente (b) kann aus natürlichen Quellen gewonnen werden, bspw. durch Reinigung und allenfalls Destillation von hydrolysierten Fetten, oder aus der industriellen Produktion. Die Kettenlänge der Fettsäuren ist variabel, und kann sich je nach spezifischer Anwendung ändern, wobei C₆- bis C₁₄₋Fettsäuren, insbesondere C₈- bis C₁₂-Fettsäuren, über eine oft bevorzugte Wirkung verfügen.

**Komponente (c), Additive:** Die erfindungsgemässen Zusammensetzungen können Additive enthalten. Solche Additive sind dem Fachmann bekannt, und beinhalten Dispersionshilfsmittel, Antiklumpmittel, Stabilisatoren, Benetzhilfsmittel, Filmbildungshilfsmittel etc. Menge und Art der Hilfsmittel richtet sich nach den gewünschten Anwendungen wie nachfolgend beschrieben. Vorzugsweise werden solche Additive ausgewählt, die weder mit Komponente (a) noch (b) reagieren.

In einer Ausgestaltung der Erfindung ist die Zusammensetzung frei von Additiven; sie besteht daher nur aus den Komponenten (a) und (b), sowie deren Reaktionsprodukten, wie vorstehend beschrieben.

In einer alternativen Ausgestaltung der Erfindung enthält die Zusammensetzung zusätzlich Additive; sie besteht daher aus den Komponenten (a) und (b), sowie deren Reaktionsprodukten, und Komponente (c).

**Partikuläre Zusammensetzung:** Der Begriff ist bekannt und betrifft eine stoffliche Zusammensetzung aus einer Vielzahl individueller Teilchen. Der Begriff betrifft Feststoffe und umfasst somit insbesondere Pulver und Granulate.

Vorteilhaft weisen die pulverförmigen Zusammensetzungen eine Partikelgrösse von 1 bis 200, bevorzugt kleiner als 100 Mikrometer auf. Solche Pulver sind insbesondere für trockene Anwendungen geeignet.

Die Partikel von Granulaten sind allgemein grösser, typischerweise im Bereich 20 Mikrometer bis 10 Millimeter, bevorzugt grösser als 100 Mikrometer. Die Granulatpartikel bestehen typischerweise aus einer Vielzahl von zusammenklebenden Einzelpartikeln. Diese Einzelpartikel sind ihrerseits im Bereich von 1 bis 200 Mikrometer gross. Typischerweise werden solche Granulate vor Anwendung mit einer Flüssigkeit vermischt.

Die genannten Partikelgrössen können mit bekannten Methoden eingestellt werden, bspw. durch Sieben, Mahlen, Granulieren. Partikelgrössen können nach den vorstehend genannten Methoden bestimmt werden.

In den erfindungsgemässen Zusammensetzungen können die vorstehend genannten Komponenten (a), (b) und ggf. (c), in weiten Bereichen variiert werden. Da sich die Molmassen von Fettsäuren stark unterscheiden, erweist sich eine Angabe in Gewichtsprozent als ungeeignet, vielmehr wird die Säure-Neutralisations-Kapazität und die Basizität der Zusammensetzung, wie nachfolgend beschrieben, als geeignete Parameter definiert.

Wie eingangs erwähnt, reagieren Komponenten (a) und (b) miteinander unter Ausbildung von Kalziumseifen (Kalziumsalzen von Fettsäuren) und Wasser. Die partikulären Zusammensetzungen enthalten daher Kalziumhydroxid-Partikel, die teilweise oder vollständig von Kalziumseifen bedeckt sind, sowie ggf. Partikel von Kalziumseifen und ggf. Partikel von Kalziumhydroxid in variierenden Mengenverhältnissen. Der Gehalt an freier Fettsäure (Komponente (b)) ist eher niedrig.

**Säure-Neutralisations-Kapazität.** Eine geeignete quantitative Beschreibung ist das Vermögen einer bestimmten Masse der erfinderischen Zusammensetzung zur Bereitstellung einer bestimmten Menge an Basenäquivalenten. Die Säure-Neutralisations-Kapazität ist also gegeben als Molalität [b_{H+}], dh. in Mol Säure [n_{H+}] welche pro kg Zusammensetzung [m_{zus}.] zur Verfügung gestellt wird. Geeignete Zusammensetzungen verfügen über eine Säure-Neutralisations-Kapazität b_{H+} von mindestens 5 mol pro kg bevorzugt von mindestens 6 mol/kg, besonders bevorzugt 8 mol/kg. Bevorzugte Zusammensetzungen verfügen über eine Säure-Neutralisations-Kapazität b_{H+} von 6 bis 26 mol Säure pro kg Wirkstoff.

Die Säure-Neutralisations-Kapazität einer Zusammensetzung kann aus der Molmasse und ihrem chemischen Verhalten bestimmt werden; Beispiele sind in nachfolgender Tabelle angegeben:

| # | Komponente (a): Ca(OH)₂ | Komponente (b): Ca-Salz | Molalität b [mol/kg] |
|---|---|---|---|
| 1 | 33.3 Gew.% | 66.6 Gew.% Kalziumoktanoat | 13 |
| 2 | 10 Gew.% | 90 Gew.% Kalziumoktanoat | 8 |
| 3 | 50 Gew.% | 50 Gew.% Kalziumoktanoat | 16 |
| 4* | 95 Gew.% | 5 Gew.% Kalziumstearat | 26 |
| 5* | 90 Gew.% | 10 Gew.% Kalziumoktanoat | 25 |
| 6* | 80 Gew.% | 20 Gew.% Ca-Salze der C₈, C₁₀ und C₁₂ Fettsäuren | 20 |

Zusammensetzung #2 ist besonders bevorzugt. Diese zeigt hervorragende Wirkung im Weinbau, ist aber teurer als die Kalziumhydroxid-reicheren Mischungen.
Zusammensetzung #4 ist besonders bevorzugt. Diese ist günstig herstellbar und zeigt hervorragende Wirkung.
Zusammensetzung #5 ist besonders bevorzugt. Diese ist günstig herstellbar und zeigt hervorragende Wirkung.
Zusammensetzung #6 betrifft eine Mischung von 20 Gew.% Kalziumsalzen der mittellangen Fettsäuren (C₈-, C₁₀- und C₁₂-Säuren). Je nach Zusammensetzung variiert die Kapazität, aber ist mindestens 20 mol Säure pro kg dieser Mischung.
Zusammensetzung #6 ist besonders bevorzugt. Diese ist günstig herstellbar und zeigt hervorragende Wirkung. Die Fettsäuremischungen können von natürlichen Quellen stammen und sind als Mischung oft günstiger als Reinsubstanzen.

Es wird darauf verwiesen, dass Verbindungen mit sehr hohen Säure-Neutralisations-Kapazitäten b_{H+} bekannt sind. So zum Beispiel NaOH (b_{H+}=25 mol/kg); Li2CO3 (b_{H+}=27 mol/kg), oder NH3, 59 mol/kg). Solche Verbindungen sind aber entweder nicht witterungsbeständig (alle obigen Verbindungen sind hervorragend wasserlöslich und werden durch Niederschlag abgewaschen), flüchtig (Ammoniak) oder teuer (Lithiumsalze), und daher nicht von praktischem Interesse im Pflanzenschutz.

**pH Wert:** Der pH-Wert der erfinderischen Zusammensetzungen liegt im Alkalischen. In einer vorteilhaften Ausgestaltung weist die Zusammensetzung einen pH von über 11.0 auf (gemessen als 5 Gew.% (aq) wie nachfolgend beschrieben); bevorzugt von über 11.5, besonders bevorzugt von über 12.0. Der pH Wert von Pflanzenschutzmitteln weicht meistens nur wenig vom neutralen Wert ab, und beträgt üblicherweise pH 4 bis 10. Grund dafür ist, dass damit Schäden an der Pflanze vermieden werden sollen. In der vorliegenden Erfindung wurde unerwarteter Weise gefunden, dass die erfinderischen Zusammensetzungen keine Pflanzenschädigungen verursachten, obwohl sie deutlich stärker alkalisch sind, das heisst einen pH Wert von deutlich über 10 aufweisen.

Die erfinderischen Zusammensetzungen können als trockene Stäube eingesetzt werden (vgl. 3. Aspekt), dann kann der pH-Wert gemessen werden, indem eine definierte Menge der Zusammensetzung in einer definierten Menge Wasser eingebracht wird, bis zur Konstanz des pH Wertes gerührt und dann der pH Wert gemessen wird. Da die erfinderischen Zusammensetzungen als Pflanzenschutzmittel verwendet werden, und diese typischerweise als wässrige Dispersionen zum Einsatz kommen, soll im Rahmen dieser Erfindung folgendes Verfahren zur Bestimmung des pH Wertes verwendet werden: 50 Gramm Zusammensetzung werden vorgelegt und auf 1 Liter Gesamtvolumen aufgefüllt für mindestens 15 Minuten durchmischt und der pH Wert gemessen. Dann wird nochmals 15 Minuten durchmischt und wiederum der pH gemessen. Falls der pH Wert dann weniger als 0.1 pH Einheiten vom pH Wert der vorherigen Messung abweicht, kann dieser letzte Wert als relevanter pH Wert verwendet werden. Falls die Abweichung grösser ist, muss nochmals 15 Minuten weitergerührt werden, und wiederum der pH gemessen werden. Dies wird wiederholt, bis der pH der letzten zwei Messpunkte weniger als 0.1 pH Einheiten voneinander abweicht.

Die erfinderischen Zusammensetzungen können in Form einer Dispersion eingesetzt werden (vgl. 3.Aspekt.) Dann ist der pH Wert der Dispersion zu messen. Allenfalls muss dabei ein Filter vor die pH-Elektrode gesetzt werden, um ihre Verschmutzung zu vermeiden. Typische Dispersionen der hier verwendeten Wirkstoffe enthalten 0.1 bis 10 Gew.% der Zusammensetzung in Wasser, also 1 bis 100 Gramm pro Liter Dispersion. Auch tiefere Gehalte von unter 0.1 Gew.% in Wasser sind anwendbar, aber aus praktischen Gründen weniger attraktiv. Höhere Gehalte als 100 Gramm pro Liter sind auch verwendbar, aber wegen der zunehmend schwierigeren Anwendbarkeit, insbesondere beim Versprühen, aus praktischen Gründen weniger attraktiv.

In einem **zweiten Aspekt** bezieht sich die Erfindung auf Verfahren zum Herstellen einer Zusammensetzung wie hier beschrieben (insbes. 1. Aspekt der Erfindung), umfassend die Schritte (i) Bereitstellen und Kombinieren der Komponenten (a) und (b) (ii) ggf. Zudosieren der Komponente (c).

Dieser zweite Aspekt der Erfindung soll nachstehend erläutert werden.
**Schritt (i):** Die Bereitstellung und das Kombinieren von festen partikulären Ausgangsmaterialien sowie von flüssigen Ausgangsmaterialien sind an sich bekannt. Die mechanische Vermischung von Fettsäuren mit Kalziumhydroxid führt zur Bildung von Mischungen aus Kalziumfettsäuresalzen und Kalziumhydroxid. Die Zusammensetzung der so gebildeten Mischung hängt von der Menge der jeweiligen Ausgangssubstanzen, und ihrer Art (zum Beispiel mittlere Kettenlänge der Fettsäuren) ab.
   Die Vermischung der Ausgangsstoffe kann in handelsüblichen Mischern erfolgen. Geeignete Gerätschaften sind dem Fachmann bekannt, und umfassen unter anderem Bandmischer und Hochenergiemischer. Geeignete Gerätschaften finden sich in zahlreichen anderen Industriebereichen wieder, wie zum Beispiel der Nahrungsmittelindustrie bei der Verarbeitung von pulverförmigen Produkten.
   Die Ausgangsstoffe werden je nach Grösse der Produktion (Menge pro Produktionsschritt), und der Produktionsart (kontinuierliche Produktion oder chargenweise Herstellung des Wirkstoffes), sowie verfügbaren Gerätschaften zusammen, in einem oder mehreren Schritten, oder nacheinander in den Mischbehälter eingebracht. Je nach Art und Verwendungszweck der spezifischen Zusammensetzung ändern sich die Verweilzeit in den Gerätschaften sowie die optimalen Verarbeitungsparameter (Temperatur, Umdrehungs- oder Rotationsgeschwindigkeit, Art der Mischelemente oder Maschinenkomponenten wie Klumpenbrecher).
   Technische Fettsäuresalze des Kalziums sind wegen der schlechten Löslichkeit und der meist sehr mechanischen, auf Vermischung basierenden Herstellung Produkte mit typischerweise weitem Zusammensetzungsbereich. So beschreibt zum Beispiel die Firma aic in ihrem Datenblatt für calcium caprylate monohydrate (= Ca-Oktanoat) ihr Produkt wie folgt: Calcium content: 10.4-12.8%; Caprylic acid content: 75.3-92.1%; der Schwermetallgehalt ist detailliert aufgeführt. Es ist dem Fachmann verständlich, dass solche Fettsäuresalze während der obigen Herstellung der Mischungen entstehen, und daher im Rahmen der vorliegenden Erfindung als solche miterfasst werden. Daher können die vorliegenden Zusammensetzungen als solche eher funktional als exakt chemisch beschrieben werden. Entsprechend wird im Rahmen dieser Erfindung immer auf die Zusammensetzung der eingesetzten Materialien verwiesen, und diese in Gew.% angegeben. Schritt (i) wird typischerweise bei Temperaturen durchgeführt, die oberhalb des Schmelzpunktes von Komponente (b) liegen.
**Schritt (ii):** Das Vermischen einer partikulären Zusammensetzung mit Additiven ist an sich bekannt und kann in handelsüblichen Geräten erfolgen.

In einer vorteilhaften Ausgestaltung betrifft die Erfindung ein Verfahren wie hier beschrieben, wobei in Schritt (i) zunächst die Komponenten (a) und (b) in einer Mühle bei Temperaturen von 20 - 80°C vermahlen werden und ggf daran anschliessend in Schritt (ii) Additive als flüssige Formulierung aufgesprüht werden.

In einem **dritten Aspekt** bezieht sich die Erfindung auf Pflanzenschutzmittel, enthaltend oder bestehend aus einer Zusammensetzung wie hier beschrieben (insbes. 1. Aspekt der Erfindung).

Dieser dritte Aspekt der Erfindung soll nachstehend erläutert werden.

**Anwendungsart und Formulierung.** Die hier beschriebenen Mittel können als feste oder flüssige Formulierung angewendet werden. Beide Anwendungsformen, also trocken (insbes. als Staub) und nass (insbes. als Dispersion) haben bestimmte Vorteile, und je nach Behandlungsziel (insbes. Pflanzen aber auch Saatgut), Jahreszeit, lokalen Gegebenheiten (insbes. Grösse der Felder; Distanz zu Nachbarkulturen, zu Gewässern zu bewohnten Gebieten) wird die eine oder andere Anwendungsform von Vorteil sein.

Im Allgemeinen ist eine Anwendung als Dispersion von Vorteil, da diese nasse Anwendungsform zu einem lokaleren Anwenden des Wirkstoffes führt. Die gegenwärtig verwendeten Anwendungsformen basieren auf eher grossen Flüssigkeitstropfen, wodurch die Windverfrachtung reduziert wird (die Tropfen sinken in Luft rasch auf den Boden) und die Anhaftung auf den Pflanzen besser ist. Als vorteilhaft werden Tropfen im Bereich von 10 Mikrometer bis 1 Millimeter in der Nassanwendung der erfinderischen Pflanzenschutzmittel angesehen. Entsprechend können die erfindungsgemässen Zusammensetzungen in Dispersionsmittel (d) (insbesondere Wasser oder wässrige Lösungen) eingebracht werden und unter Rühren oder anderen geeigneten Dispersionsgeräten in eine flüssige Dispersion überführt werden. Diese können mittels bekannten Gerätschaften auf das zu behandelnde Ziel (insbes. Pflanzen) ausgebracht werden. Geeignete Gerätschaften sind bekannt, und umfassen handelsübliche Spritzen, Spritzbögen, Lanzen und Vernebler. Typischerweise wird dabei ein Vorratsbehälter mit einem eingebauten Rührer auf einem entsprechenden Transportmittel (zum Beispiel Traktor) mitgeführt und die Dispersion mittels Pumpen in die Verteilarme gepumpt und dort mittels Düsen in feine Tröpfen überführt, die dann auf den Pflanzen niederschlagen. Die Erfindung betrifft daher ein Pflanzenschutzmittel wie hier beschrieben, in der Form einer flüssigen Formulierung, enthaltend Komponenten (a), (b) und (c) zu 0.1-10 Gew.% (bevorzugt 0.2-5 Gew.%) und Dispersionsmittel (d) zu 90-99.9 Gew.% (bevorzugt zu 95-99.8 Gew.%).

Trockene Anwendungen können von Vorteil sein, wenn das Ziel nicht mehr nass werden soll, oder bereits selber trocken ist. Hier ist die Saatgutbehandlung zu erwähnen, bei welcher vorteilhaft trocken behandelt wird. In einer Ausgestaltung wird das hier beschriebene Mittel daher als Feststoff, insbesondere als Staub, ausgebracht. Dazu sind geeignete Gerätschaften bekannt, und werden heute bereits im Landbau verwendet um bspw. Gesteinsmehl auszubringen. Die Erfindung betrifft daher ein Pflanzenschutzmittel wie hier beschrieben, in der Form einer festen Formulierung, insbesondere in der Form eines Pulvers, bestehend aus (a) Kalziumhydroxid, (b) Fettsäuren.

Bei der Behandlung von Pflanzen können die hier beschriebenen Formulierungen auf die trockenen Blätter der Pflanzen oder auf die feuchten Blätter der Pflanzen ausgebracht werden.

**Stabilität.** Da die Anwendung auf dem Feld eine gewisse Robustheit der Zusammensetzungen voraussetzt, müssen diese mindestens einige Stunden stabil sein. Typische Feld-Anwendungen beinhalten ein Vor-Mischen aus einer Lieferform oder einem Konzentrat mittels geeigneter Hilfsmittel (Rührer, Pumpen) in einem Behälter, welcher nachher mittels eines Fahrzeugs auf das zu behandelnde Feld gebracht wird. Entsprechend dauern der Anwendungsvorgang und der Transport einige Stunden; während dieser Zeit muss das Pflanzenschutzmittel stabil bleiben. Pflanzenschutzmittel mit einer Stabilität von weniger als einer Stunde sind aus praktischen Gründen daher nicht geeignet. Die erfindungsgemässen Pflanzenschutzmittel erfüllen das Kriterium der Stabilität. Entsprechend betrifft die Erfindung Pflanzenschutzmittel wie hier beschrieben aus der Gruppe der Bakterizide, Fungizide und Insektizide (mit Wirkung gegen Insekten, Milben, und/ oder Spinnentiere).

**Wirkmechanismus.** Der Mechanismus der erfinderischen Pflanzenschutzmittel ist nicht im Detail bekannt, jedoch erstaunlich im Hinblick auf die Tatsache, dass vergleichbare Wirkung wie mit Kupferpräparaten erzielt werden kann. Ohne sich an eine Theorie gebunden zu fühlen, werden die beiden nachfolgenden Effekte als wichtig angesehen:
- Lokalisierung von mittellangen und langen Fettsäuren auf Pflanzenoberflächen selbst während Bewitterungsphasen. Hier knüpft der Wirkstoff vermutlich an die Wirkung von Seifen an, verbessert aber die Anwendungsmöglichkeit und den Wirkzeitraum, da die Anionen (Karbonsäure-Reste der Seifen) über Tage bis Wochen auf der Pflanzenoberfläche verfügbar sind.
- Bereitstellung von Säure-Neutralisationsmöglichkeiten. Viele Mikroorganismen verwenden organische Säuren, um die Schutzmechanismen der Pflanzenoberfläche zu durchdringen, oder um Pflanzenzellen zu besiedeln. Eine prominente Säure ist dabei die Oxalsäure. Es wird daher vermutet, dass die erfinderischen Zusammensetzungen über ihren Gehalt an Kalzium ein erhebliches Potential zur Neutralisierung solcher Säuren aufweisen. Es ist bekannt, dass Carbonsäuren oft schwerlösliche Salze mit Kalzium bilden; im Falle von Oxalsäure ist dies ein speziell unlösliches Kalziumoxalat.

In einer weiteren Ausgestaltung betrifft die Erfindung die Verwendung eines Mittels gemäss wie hier beschrieben, in Weinbaukulturen; und/oder in Obstkulturen; und/oder in Gemüsekulturen; und/oder in Gewächshauskulturen. Es wurde gefunden, dass spezifische Mischungen von hervorragender Wirkung gegen verschiedene Pflanzenschädlinge und daher für Anwendung im Pflanzenschutz attraktiv sind. Insbesondere Vergleichsversuche mit kupferhaltigen, marktüblichen Produkten haben gezeigt, dass die erfindungsmässigen Mittel vergleichbare oder sogar bessere Wirkung als die Kupferpräparate aufweisen, dabei aber den Vorteil aufweisen, schwermetallfrei und somit umweltverträglicher zu sein. Bevorzugte Zusammensetzungen sind im 1. Aspekt der Erfindung genannt, Wirkdaten sind in den Beispielen angegeben. Experimentell sind Zusammensetzungen von Kalziumhydroxid und Oktansäure als sehr effizient erkannt worden. In Abhängigkeit vom Behandlungsziel sind auch längere Carbonsäuren von Vorteil. Wegen der Vielzahl von Behandlungszielen und Anwendungsarten können geeignete Zusammensetzungen und Mittel vom Fachmann im Rahmen von einfachen Versuchsreihen und unter Zugrundelegung der hier beschriebenen Parameter identifiziert werden.

**Wirtschaftlichkeit.** Die Bereitstellung von Wirkung auf einer Kultur (Pflanzen) erzeugt Kosten. Die Gesamtkosten bestehen in erster Näherung aus: Gesamtkosten = (Kosten für Pflanzenschutzmittel und Hilfsmittel) + (Kosten pro Austrag). Die Kosten pro Austrag bestehen aus Maschinenkosten, Personalaufwand, allfälligen Mieten etc. Ein Teil dieser Kosten ist pro Austrag immer da (Bereitstellung der Gerätschaften, die Maschinen etc), und unabhängig von den Kosten des Materials.

Eine Behandlung ist daher attraktiv, wenn sie (a) tiefe Kosten für Wirk- und Hilfsstoffe aufweist (b) selten ausgeführt werden muss. Dies heisst, der Zeitraum zwischen zwei Austragungen des Wirkstoffes sollte möglichst lange sein. Die erfinderischen Pflanzenschutzmittel sind wirtschaftlich attraktiv in Bezug auf die diskutierten Punkte (a) und (b).

Zu Punkt (a): Die erfinderischen Mittel verwenden Mischungen von Kalziumhydroxid und Kalzium-Fettsäuresalzen. Dies heisst also, dass ein Teil der Masse des Wirkstoffes aus einer günstigen Komponente aufgebaut werden kann (Kalziumhydroxid), und so der Endpreis des Wirkstoffes tiefer ist, als bei sehr Fettsäure-reichen Formulierungen.

Der Fachmann wird sofort erkennen, dass hier eine Möglichkeit zur Optimierung besteht, also die Frage, welche Wirkungssteigerung pro Einsatz oder Masse noch welche Kostenerhöhung toleriert.

Für die hier beschriebenen Pflanzenschutzmittel gilt, dass Kalziumhydroxid etwa 10-fach günstiger ist (per Masse) als die Fettsäuren.

Da die Molgewichte der Fettsäuren mit der Kettenlänge massiv ansteigen, führen tiefe Kettenlängen zu geringeren Anteilen an Fettsäuren am Produkt, das heisst, ein vergleichbares Kalziumsalz ist günstiger falls es aus kürzeren Fettsäuren aufgebaut werden kann.

Zu Punkt (b): Die verbesserte Beständigkeit der Kalziumsalze im Vergleich zu den sehr gut wasserlöslichen traditionellen Schmierseifen (oder auch Na-, oder NH₄- Salze der Fettsäuren) bei Bewitterung (v.a. Regen, aber auch Tau) verlängern die Wirkdauer, und reduzieren die Anzahl an Austragungen des Wirkstoffes während des Wachstums der Ernte/Pflanzen.

Zur Wirkdauer/Anwendungshäufigkeit: Die Wasserlöslichkeit der kurzkettigen Fettsäure-Ca Salze ist hoch, Kalziumacetat (Fettsäure C₂) ist sehr gut wasserlöslich; Kalziumbutyrat (Fettsäure C₄) ist immer noch gut löslich, während die mittleren Fettsäuren schwerstlöslich oder praktisch unlöslich sind.

Es zeigt sich somit, dass der Anteil an den beiden Komponenten (a) und (b) flexibel ist und für verschiedene Anwendungsbereiche unterschiedlich ausfallen kann. Dies bedeutet insbesondere, dass verschiedene Anteile und verschiedene Komponenten (Kalziumhydroxid, oder Typ und Zusammensetzung der Fettsäuren) je nach Anwendungsart (Jahreszeit, Ausbringungsform), Ausbringungsart (flüssig, oder als Feststoff), Pflanzentyp (Rebe, Zwiebel, Kirsche, etc.) und Schädling (Pilze, Bakterielle Infektionen, Insekten) von Vorteil sein können.

Die Säure-Neutralisationskapazität ist ein wichtiger Faktor, aber je nach Kultur, Bedingungen und Typ der Schädlinge kann auch die Verteilung der Kettenlängen der Fettsäure für den Fachmann von Interesse sein. Mittellange Fettsäuren sind von Vorteil bei der Behandlung von Mehltau (insbes. im Rebenanbau), längere Fettsäuren sind von Vorteil bei der Behandlung von Braunfäule (insbes. bei Tomaten). Beim Anbau von Zwiebeln kann der Einsatz von langkettigen Fettsäuren in geringerem Massenanteil (z.B. 5 oder 10 Gew.% mit Kalziumhydroxid) eine wirtschaftlich attraktive Mischung darstellen. Im Allgemeinen ist es von Interesse, bei intensiv zu schützenden Kulturen (bspw. Zwiebeln) oft anzuwenden, und dann für ein günstiges Produkt (Preis pro Masse Zusammensetzung) zu sorgen. Dies bedeutet also tiefere Gehalte von Fettsäuresalzen in der erfinderischen Mischung. In Anwendungen zu Zeitpunkten geringen Niederschlags (z.B. Weinanbau im Sommer oder Frühherbst) kann es von Interesse sein, seltener Wirkstoff auszubringen, und eher höhere Anteile an Fettsäuresalzen im Wirkstoff zu wählen. Hier sind zum Beispiel Wirkstoffe mit 50, 66, oder sogar über 80 Gew.% Fettsäuresalz geeignet. Diese Zusammensetzungen sind dann teurer, deren Attraktivität beruht auf einem höheren Zeitintervall zwischen den Anwendungen, und damit reduzierten Kosten für das Ausbringen des Wirkstoffes.

Die nachstehend genannten **Beispiele** dienen der weiteren Erläuterung der Erfindung; sie sollen die Erfindung in keiner Weise limitieren

### Herstellung der Proben und Zusammensetzung:

Verschiedene Mengen von Kalziumhydroxid wurden mit verschiedenen Fettsäuren (Carbonsäuren) vermengt. In allen Versuchen wurde eine Planetenmühle Fritsch, Pulverisette 6 und Mahlbecher aus Zirkon (Volumen = 0.5 l; Durchmesser: 10 cm, Höhe: 7 cm) bei einer Geschwindigkeit von 500 rpm verwendet.
**Beispiel 1: Ca(OH)2 / 5 Gew.% Ca(St)2.**
   Kalziumhydroxid wurde mit Stearinsäure in einer Planetenmühle in Chargen von 100 bis 200 g und mittels Zirkonoxid-Mahlkugeln vermischt, und während der Verarbeitung auf mindestens 60 °C erwärmt. Die Zusammensetzung des Materials war 95 Gew.% Kalziumhydroxid und 5 Gew.% Kalziumstearat **Ca(St)2,** welches sich durch Reaktion von Kalziumhydroxid und der eingesetzten Stearinsäure während dem Prozess gebildet hat. Das Material ist ein feinstes, weisses Pulver.
**Beispiel 2: Ca(OH)2 rein** (Kontrollversuch ohne Fettsäure) Kalziumhydroxid wurde ohne weitere Zusätze mit einer Planetenmühle gemahlen, unter Verwendung der gleichen Gerätschaften, und gleicher Mahldauer.
**Beispiel 3: CaCO3 / 5 Gew.% Ca(St)2** (Kontrollversuch mit Kalziumcarbonat statt Kalziumhydroxid) Kalziumcarbonat (Kalkstein) wurde mit Stearinsäure in einer Planetenmühle in Chargen von 200 bis 300 g und mittels Zirkonoxid-Mahlkugeln vermischt, und während der Verarbeitung auf mindestens 60 °C erwärmt. Die nominale Zusammensetzung des Materials war 95 Gew.% Kalziumcarbonat und 5 Gew.% Kalziumstearat, welches sich durch Reaktion von Kalziumcarbonat und der eingesetzten Stearinsäure während dem Prozess voraussichtlich bildet. Das Material ist ein feinstes, weissgraues Pulver.
**Beispiel 4: Ca(St)2 rein** (Kontrollversuch nur mit Fettsäure) Kalziumstearat wurde ohne weitere Zusätze mit einer Planetenmühle gemahlen, unter Verwendung der gleichen Gerätschaften, und gleicher Mahldauer.

Die Zusammensetzung der Pulver wurde mittels Mikroanalyse (Gehalt an C, H, N; Cube, elementar, Deutschland) bestätigt. Alle obigen Proben wurden zusammen verblindet an ein Forschungsinstitut weitergegeben und als Wirkstoff getestet:

### Versuche gegen Plasmopara viticola auf Trauben

Die vorgängig beschriebenen Proben wurden in einem unabhängigen Pflanzenforschungsinstitut getestet. Die Versuche waren als Blindproben angelegt parallel zu den nachstehend angeführten Kontrollen.

### Studiendesign:

Als Zielpflanzen wurden Chasselas Reben (Stadium: 3-5 Blätter; Höhe 11 - 15 cm) in Töpfen (275 ml Erde pro Topf) eingesetzt. Während des Versuchs wurden folgende Bedingungen eingehalten: Luftfeuchte: 100 % r. h.; Temperatur 20 - 21 °C; 16 h pro Tag Licht. Zur Inokulation wurden auf die abaxiale Seite der voll entwickelten Blätter Plasmopara viticola (50'000 Sporen/ml) gesprüht, dabei wurde die ganze Pflanze inokuliert.

Alle Versuche wurden auf zwei Arten durchgeführt: Art 1. Staubapplikation auf der trockenen Testpflanze vor der Inokulation mit dem Pathogen (sog. Standardverfahren) Art 2. Staubapplikation auf eine nasse Testpflanze vor der Inokulation mit dem Pathogen.
Auswertung: nach (1) Anzahl Blätter mit Krankheitssymptomen (Disease incidence)(2) Schweregrad der Krankheitssymptomen (Disease severity): Anteil der befallenen Blattoberfläche, in % der Gesamtblattoberfläche. Daraus wurde dann die kombinierte "Efficacy severity" in % ausgerechnet.
Kontrollen: (a) Negativ, ohne Behandlung, (b) Positiv, Behandlung mit einem Kupferpräparat, Kocide Opti 0.003 %.

5 Gew.% Kalziumstearat auf Kalziumhydroxid (Bsp. 1) und reines Kalziumhydroxid (Bsp. 2) sind in einer Studie überprüft worden. 5 Gew.% Kalziumstearat auf Kalziumhydroxid zeigt eine bessere Wirkung als die Positivkontrolle. Reines Ca(OH)₂ zeigt jedoch nur eine geringe Reduktion des Befalls.

Die Ergebnisse sind in nachstehenden Tabellen zusammengefasst; die Darstellung der Resultate erfolgt als Mittelwert +/- Standardabweichung.

| | % Blattfläche mit Befalls-symptomen | | % befallene Blätter | | Efficacy Severity / % | |
|---|---|---|---|---|---|---|
| AnwendungsArt: | Art 1 (trocken) | Art 2 (nass) | Art 1 (trocken) | Art 2 (nass) | Art 1 (trocken) | Art 2 (nass) |
| Bsp. 1 Ca(OH)₂ / 5Gew.%Ca(St)₂ | 16 +/- 9 | 8 +/- 7 | 65 +/- 15 | 40 +/- 18 | 83.2 | 91.8 |
| Bsp. 2 Ca(OH)₂ 100Gew.% | 50 +/- 22 | 59 +/- 22 | 89 +/- 17 | 93 +/- 10 | 46.8 | 36.4 |
| Negativkontr. | 93 +/- 4 | 93 +/- 4 | 100 | 100 | | |
| Positivkontr. | 17 +/-6 | 17 +/-6 | 84 +/-8 | 84 +/-8 | 81.7 | 81.7 |

5 Gew.% Kalziumstearat auf Kalziumcarbonat (Bsp. 3) und reines Kalziumstearat (Bsp. 4) sind in einer separaten Studie überprüft worden. Beide sind inaktiv und führen zu keinen relevanten Reduktionen des Befalls.

| | % Blattfläche mit Befalls-symptomen | | % befallene Blätter | | Efficacy Severity / % | |
|---|---|---|---|---|---|---|
| AnwendungsArt: | Art 1 (trocken) | Art 2 (nass ) | Art 1 (trocken) | Art 2 (nass) | Art 1 (trocken) | Art 2 (nass) |
| Bsp. 3 CaCO₃ / 5Gew.%Ca(St)₂ | 42 +/- 7 | 47 +/- 9 | 91 +/- 10 | 86 +/- 11 | 37.6 | 30.3 |
| Bsp. 4 Ca(St)₂ 100Gew.% | 62 +/- 20 | 58 +/- 8 | 93 +/- 10 | 91 +/- 10 | 7.3 | 13.3 |
| Negativkontr. | 67 +/-18 | 67 +/-18 | 92 +/-20 | 92 +/-20 | | |
| Positivkontr. | 6 +/- 3 | 6 +/- 3 | 61 +/-16 | 61 +/-16 | 90.6 | 90.6 |

Die Ergebnisse zeigen, dass die erfindungsgemässen Pflanzenschutzmittel eine vergleichbare Wirkung aufweisen wie die Positivkontrolle, dabei aber schwermetallfrei sind. Ferner zeigt sich, dass das Fehlen einer der Komponenten (a) oder (b) zu unwirksamen Produkten führt. Ebenso führt der Ersatz von Kalziumhydroxid durch Kalziumkarbonat zu unwirksamen Produkten.

## Patentansprüche

1. Partikuläre Zusammensetzung, enthaltend ein Gemisch aus
(a) Kalziumhydroxid, (b) Fettsäuren und ggf. (c) Additiven, wobei
• besagtes Kalziumhydroxid (a) einen Schwermetallgehalt von weniger als 5000 ppm aufweist;
• mindestens 80 Gew.% der besagten Fettsäuren (b) eine Kettenlänge von mindestens 6 Kohlenstoffen aufweisen;
• besagte Zusammensetzung einen pH von über 11.0 aufweist (gemessen als 5 Gew.-% (aq));
• besagte Zusammensetzung eine Neutralisationskapazität für Säuren b_{H+} > 5 mol/kg aufweist.

2. Zusammensetzung nach Anspruch 1, wobei
a. das Kalziumhydroxid einen Schwermetallgehalt von weniger als 1000 ppm aufweist; und / oder
b. die Fettsäure entweder eine reine Fettsäure ausgewählt aus der Gruppe der C₈₋₁₂ Fettsäure ist oder ein Gemisch von Fettsäuren ist, in welchem mindestens 80 Gew.% der Fettsäure-Moleküle eine Kettenlänge von mindestens 8 Kohlenstoffen beinhalten; und / oder
c. die Additive ausgewählt sind aus der Gruppe umfassend Dispersionshilfsmittel, Antiklumpmittel, Stabilisatoren, Benetzungsmittel und Filmbildungsmittel.

3. Zusammensetzung nach Anspruch 1 oder 2, welche
• eine Neutralisationskapazität für Säuren b_{H+} von 6 bis 26 mol/kg aufweist; und / oder
• eine eine Primär-Partikelgrösse von 1 bis 200 Mikrometer aufweist.
• einen pH > 11.5 (gemessen als 5 Gew.-% (aq)).

4. Zusammensetzung nach einem der Ansprüche 1 - 3, wobei die Komponente (b) aus natürlichen Quellen gewonnen ist, und / oder mindestens 50 Gew.% der Fettsäuren von mittlerer Kettenlänge sind.

5. Verfahren zum Herstellen einer Zusammensetzung gemäss einem der Ansprüche 1 - 4, umfassend die Schritte
i. Bereitstellen und Kombinieren der Komponenten (a) und (b)
ii. ggf. Zudosieren der Komponente (c).

6. Verfahren nach Anspruch 5, wobei in Schritt (i) zunächst die Komponenten (a) und (b) in einer Mühle bei Temperaturen von 20 - 80°C vermahlen werden und ggf. daran anschliessend in Schritt (ii) Additive als flüssige Formulierung aufgesprüht werden.

7. Pflanzenschutzmittel, enthaltend oder bestehend aus einer Zusammensetzung gemäss einem der Ansprüche 1 - 4.

8. Pflanzenschutzmittel nach Anspruch 7 in der Form einer festen Formulierung, bestehend aus (a) Kalziumhydroxid, (b) Fettsäuren.

9. Pflanzenschutzmittel nach Anspruch 7 in der Form einer flüssigen Formulierung, enthaltend Komponenten (a), (b) und ggf. (c) zu 0.1-10 Gew.% und Dispersionsmittel (d) zu 90-99.9 Gew.%.

10. Pflanzenschutzmittel gemäss einem der Ansprüche 7-9 aus der Gruppe der Bakterizide, Fungizide und Insektizide.

11. Verwendung eines Mittels nach einem der Ansprüche 7-10,
a. im Weinbaukulturen; und/oder
b. in Obstkulturen
c. in Gemüsekulturen;
d. in Gewächshauskulturen.
